# FASCICULE DE BREVET EUROPEEN

(11) **EP 0 622 538 B1**
(45) Date de publication et mention de la délivrance du brevet: **20.11.1996**
(21) Numéro de dépôt: 94400901.8
(22) Date de dépôt: 27.04.1994
(51) Int. Cl.: F02K 1/80, F02K 1/12

(54) **Tuyère d'éjection à géométrie variable pour turbomachine**
Schubdüse mit variabeler Geometrie für Turbomaschine
Variable geometry exhaust nozzle for turbomachine

(30) Priorité: 29.04.1993 FR 9305060
(43) Date de publication de la demande: 02.11.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Berneuil, Yves Roger Jean, F-75010 Paris (FR); Carletti, Ollivier, F-77000 Vaux le Penil (FR); Jourdain, Gérard Ernest André, F-91250 Saintry sur Seine (FR)

(56) Documents cités:
- EP-A- 0 149 943
- FR-A- 2 096 538
- FR-A- 2 227 433
- FR-A- 2 524 937
- GB-A- 2 230 299
- US-A- 2 969 641
- US-A- 4 878 618

## Description

La présente invention a pour objet une tuyère axisymétrique à section réglable destinée à équiper une turbomachine et comportant au moins une couronne de volets, ladite couronne de volets comprenant une série de volets commandés et une série de volets suiveurs intercalés, chaque volet suiveur chevauchant les surfaces intérieures des deux volets commandés adjacents et étant retenu sur lesdits volets articulés par des moyens d'accrochage.

Une telle tuyère à section réglable est connue notamment par le document US-2 969 641 qui montre une couronne de volets commandés articulés sur la partie arrière d'un carter, dans laquelle l'étanchéité entre deux volets commandés adjacents est assurée par une plaque métallique plane et flottante qui chevauche les surfaces intérieures desdits deux volets commandés. Cette plaque métallique est appuyée sur les volets par la pression des gaz en cours de fonctionnement de la tuyère. Des moyens complémentaires constitués de barrettes en appui sur la face externe des volets sont prévus pour maintenir positivement chaque volet suiveur contre les volets commandés adjacents.

On peut encore citer les documents FR-A-2 227 433 et FR-A-2 524 937 qui montrent des tuyères convergente-divergente, dans lesquelles les volets suiveurs sont accrochés aux volets commandés par des moyens d'accrochage qui autorisent un déplacement axial des volets suiveurs par rapport aux volets commandés.

On peut également mentionner le document FR-A - 2 096 538 qui concerne une tuyère inverseuse de poussée à section variable, dans laquelle les volets suiveurs sont montés basculants sur les arbres d'articulation des volets commandés.

Dans les documents précédents, les volets suiveurs sont plans. Or, de plus en plus, il est nécessaire de diminuer les radiations infrarouges émises par le jet chaud des gaz d'échappement de la tuyère. Ceci peut être réalisé notamment par l'utilisation de volets suiveurs lobés de forme convexe.

Ces volets suiveurs de forme convexe engendrent une traînée supplémentaire. Il en résulte qu'un effort axial s'exerce sur les volets suiveurs.

Le but de la présente invention est de proposer une tuyère du type mentionné ci-dessus dans laquelle les moyens d'accrochage d'un volet suiveur permettent non seulement un maintien en contact avec les volets commandés adjacents lors de l'arrêt du moteur et le guidage latéral dudit volet suiveur, mais permettent également le maintien axial du volet suiveur par rapport à l'éjection des gaz.

L'invention atteint son but par le fait que les moyens d'accrochage d'un volet suiveur comportent une épingle double faisant fonction de ressort de maintien dudit volet suiveur contre les surfaces intérieures des deux volets commandés adjacents, ladite épingle comportant, en amont, deux portions d'extrémité articulées respectivement sur les deux volets commandés adjacents, et, en aval, une portion médiane fixée sur ledit volet suiveur par des moyens de fixation.

Avantageusement, les portions d'extrémité de l'épingle sont divergentes. L'invention s'applique avantageusement à une tuyère à volets suiveurs lobés, mais elle peut également s'appliquer à une tuyère à volets suiveurs plans.

D'autres avantages et caractéristiques de l'invention ressortiront à la lecture de la description suivante fait à titre d'exemple et en référence aux dessins annexés dans lesquels :

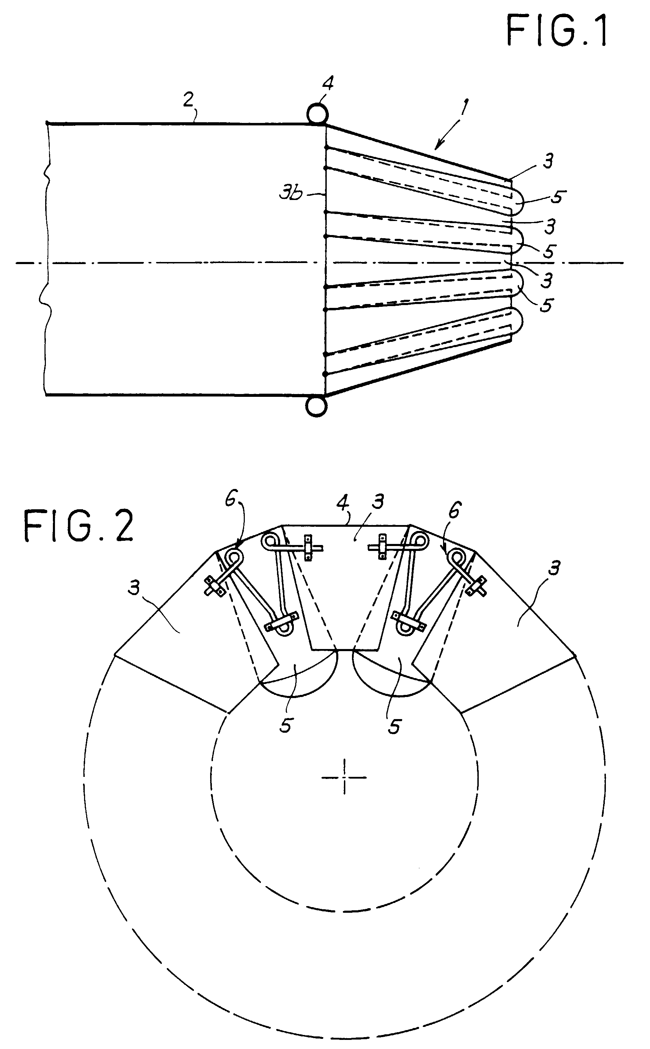

la figure 1 représente schématiquement, en coupe, la partie arrière d'une turbomachine à gaz munie d'une tuyère à géométrie variable constituée selon la présente invention.
la figure 2 est une vue arrière de la tuyère représentée sur la figure 1,

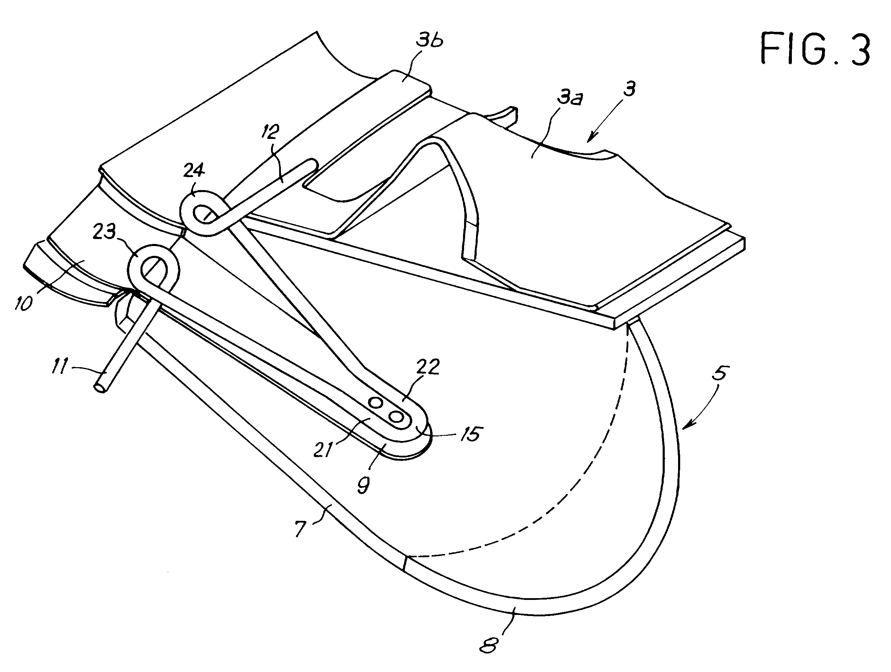

la figure 3 montre la disposition des moyens d'accrochage d'un volet suiveur sur un volet commandé, les moyens de fixation desdits moyens d'accrochage n'étant pas représentés par souci de clarté,

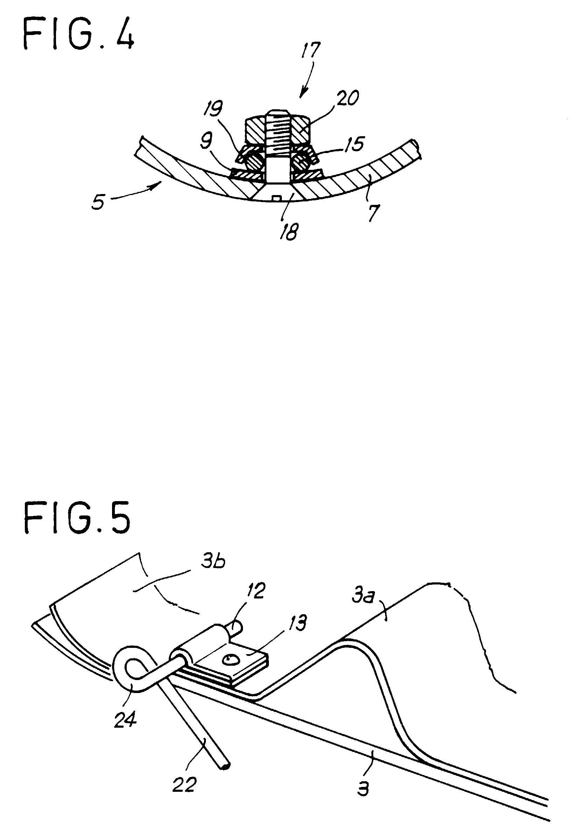

la figure 4 montre la fixation de l'épingle sur le volet suiveur, et
la figure 5 montre l'articulation de l'épingle sur le volet commandé.

La référence 1 représente une tuyère axisymétrique à géométrie variable qui est disposée en aval d'un tube à jet 2 de gaz chauds d'une turbomachine d'aviation.

La tuyère 1 comporte une première série de volets 3, dits volets commandés, qui se présentent sous la forme de plaques trapézoïdales articulées de manière connue par leur extrémité amont 3b sur un anneau polygonal 4 solidaire du tube à jet 2.

Elle comporte également une deuxième série de volets 5, dits volets suiveurs, qui sont intercalés entre les volets commandés et qui sont destinés à obturer les interstices séparant les volets commandés 3. Chaque volet suiveur 5 chevauche les surfaces intérieures des deux volets commandés 3 adjacents, et il est maintenu positivement en appui sur lesdits deux volets commandés 3 par un dispositif d'accrochage, se présentant sous la forme d'une épingle double 6 qui agit à la manière d'un ressort. Chaque volet commandé 3 est réalisé en matériau composite et il présente sur sa face extérieure une partie métallique 3a qui est articulée sur l'anneau polygonal 4, et qui est reliée aux moyens de manoeuvre de la série de volets commandés 3.

Le volet suiveur 5 est également réalisé en matériau composite. Il se présente sous la forme d'un secteur tronconique 7 qui se termine en aval par une partie sphérique 8. Le volet suiveur 5 forme ainsi un lobe convexe, à la sortie des gaz s'échappant de la tuyère 1. Le secteur tronconique 7 est solidaire d'une pièce métallique 9 dont l'extrémité amont 10 est articulée sur l'anneau polygonal 4.

L'épingle double 6 est réalisée à partir d'un fil à ressort. Elle présente, en amont, deux portions d'extrémité 11, 12 qui, au repos, sont sensiblement alignées et dirigées dans des directions opposées et qui sont articulées respectivement sur les deux volets commandés 3 adjacents au voisinage de l'articulation 3b desdits volets commandés sur l'anneau 4. L'articulation s'effectue par engagement coulissant des portions d'extrémité 11 et 12 de l'épingle 6 dans les alésages de colliers 13 fixés par boulonnage sur la face extérieure desdits volets commandés 3.

L'épingle 6 est fixée en amont par sa portion médiane 15 sur la face extérieure du volet suiveur 5 par des moyens de fixation 17 qui comportent des vis 18 assurant la liaison du secteur tronconique en composite 7, de la pièce métallique 9 et de la portion médiane 15 de l'épingle 6. La portion médiane 15 se présente sous la forme d'un coude emprisonné entre la pièce métallique 9 et un cavalier 19 engagé dans les vis 18. Des écrous 20 assurent le bridage de l'ensemble.

Les deux branches 21 et 22 du coude 15 s'étendent vers l'amont et rejoignent respectivement les portions d'extrémité 11 et 12 au moyen de boucles 23 et 24.

La fonction ressort de l'épingle 6 et le sens de l'effort appliqué sur le volet suiveur 5 résultent de l'écart d'angle des deux portions d'extrémité 11 et 12 de l'épingle 6 entre la position montée et la position non montée.

Le maintien des volets suiveurs 5 par rapport aux volets commandés 3 est assuré, à l'arrêt, par la fonction ressort de l'épingle double 6.

L'épingle 6 assure ainsi une triple fonction pour le volet suiveur 5 :
- elle permet le maintien axial du volet suiveur 5 par rapport à l'éjection des gaz,
- elle permet le guidage latéral du volet suiveur 5,
- elle permet le maintien en contact du volet suiveur 5 et des volets commandés adjacents 3 lors de l'arrêt du moteur.

## Revendications

1. Tuyère axisymétrique à section réglable destinée à équiper une turbomachine et comportant au moins une couronne de volets, ladite couronne de volets comprenant une série de volets commandés (3) et une série de volets suiveurs (5) intercalés, chaque volet suiveur (5) chevauchant les surfaces intérieures des deux volets commandés (3) adjacents et étant retenu sur lesdits volets commandés par des moyens d'accrochage,
caractérisée en ce que les moyens d'accrochage d'un volet suiveur (5) comportent une épingle double (6) faisant fonction de ressort de maintien dudit volet suiveur (5) contre les surfaces intérieures des deux volets commandés (3) adjacents, ladite épingle (6) comportant, en amont, deux portions d'extrémité (11, 12) articulées respectivement sur les deux volets commandés (3) adjacents, et, en aval, une portion médiane (15) fixée sur ledit volet suiveur (5) par des moyens de fixation (17).

2. Tuyère selon la revendication 1 dans laquelle les volets suiveurs (5) sont lobés.

3. Tuyère selon la revendication 2 dans laquelle le volet suiveur (5) se présente sous la forme d'un secteur tronconique (7) qui se termine en aval par une partie sphérique (8).

4. Tuyère selon l'une quelconque des revendications 1 à 3, caractérisée en ce que les portions d'extrémité (11, 12) de l'épingle (6) sont divergentes.

## Patentansprüche

1. Achsensymmetrische Düse mit verstellbarem Querschnitt für ein Turbotriebwerk
mit wenigstens einem Kranz von Klappen, der eine Reihe von gesteuerten Klappen (3) und eine Reihe von dazwischenliegenden Nachlaufklappen (5) aufweist, wobei jede Nachlaufklappe (5) die Innenfläche der beiden benachbarten gesteuerten Klappen (3) überlappt und durch Mitnehmermittel an diesen gehalten ist,
**dadurch gekennzeichnet,**
daß die Mitnehmermittel einer Nachlaufklappe (5) eine Doppelnadel (6) umfassen, die als Feder zum Halten der Nachlaufklappe (5) gegen die Innenfläche der beiden benachbarten gesteuerten Klappen (3) fungiert, wobei diese Nadel (6) auf der stromaufwärtigen Seite Endbereiche (11, 12), die jeweils an einer den beiden benachbarten gesteuerten Klappen (3) angelenkt sind, und auf der stromabwärtigen Seite einen Mittelteil (15) aufweist, der mit Befestigungsmitteln (17) an der Nachlaufklappe (5) befestigt ist

2. Düse nach Anspruch 1, bei der die Nachlaufklappen (5) keulenförmig ausgebildet sind.

3. Düse nach Anspruch 2, bei der die Nachlaufklappe (5) die Form eines Kegelstumpfsektors hat, der auf der stromabwärtigen Seite in einem sphärischen Teil (8) endet.

4. Düse nach einem der Ansprüche 1 bis 3, dadurch gekennzeichnet, daß die Endbereiche (11, 12) der Nadel (6) auseinanderlaufen.

## Claims

1. Axisymmetric nozzle with adjustable cross-section intended to equip a turbine engine, and including at least one ring of flaps, the said ring of flaps comprising a series of driven flaps (3) and a series of interposed follower flaps (5), each follower flap (5) overlapping the inner surfaces of the two adjacent driven flaps (3) and being retained on the said driven flaps by fastening means, characterized in that the means of fastening a follower flap (5) include a double pin (6) performing the function of a spring for holding the said follower flap (5) against the inner surfaces of the two adjacent driven flaps (3), the said pin (6) including, upstream, two end portions (11, 12) articulated respectively onto the two adjacent driven flaps (3) and, downstream, a central portion (15) fixed onto the said follower flap (5) by fixing means (17).

2. Nozzle according to Claim 1, in which the follower flaps (5) are lobed.

3. Nozzle according to Claim 2, in which the follower flap (5) has the shape of a frustoconical sector (7) which terminates downstream in a spherical part (8).

4. Nozzle according to any one of Claims 1 to 3, characterized in that the end portions (11, 12) of the pin (6) are divergent.
